# EUROPEAN PATENT SPECIFICATION

(11) **EP 2 444 550 B1**
(45) Date of publication and mention of the grant of the patent: **01.11.2017**
(21) Application number: 11184728.1
(22) Date of filing: 11.10.2011
(51) Int. Cl.: D21H 21/36, A01C 1/04

(54) **Structure for mulching, method for production and use thereof**
Struktur zum Mulchen, Verfahren zu deren Herstellung und Verwendung
Structure pour pailler, procédé de production et son utilisation

(30) Priority: 25.10.2010 IT MI20101964
(43) Date of publication of application: 25.04.2012
(73) Proprietor: ASPIC S.r.l. in Liquidazione, 20131 Milano (IT)
(72) Inventor: Fato, Paolo, 20148 Milano (IT)
(74) Representative: Modiano, Micaela Nadia

(56) References cited:
- EP-A1- 1 275 778
- EP-A1- 2 199 046
- WO-A1-00/67549
- WO-A1-94/22287
- GB-A- 1 236 855
- US-A- 3 939 606
- US-A- 5 866 269
- US-A1- 2003 192 236
- US-A1- 2004 200 591

## Description

The present invention relates to a structure in sheet or roll form, to a method for preparing it and to its use as material for mulching.

Mulching is a method used on some crops to contain weeds and fungi that are potentially pathogenic or to bring forward the start of production of the crops, to protect cultivations from the cold and from some parasites, to improve production performance or to keep the harvest clean from mud, and the like.

In the past vegetable mulch was used, such as bark or plants that were capable of limiting the growth of other weeds but did not compete with the main crop.

In the 1970s, surfaces treated by mulching were increased considerably thanks to the introduction and refinement of plastic materials and other synthetic products.

US 5 866 269 discloses a new agricultural mulching method and an improved method of arranging mulch on a field under cultivation with furrows, in which mulching is realized by a substrate of extensible paper having a upper surface and a lower surface, wherein the lower surface of the paper substrate will be exposed for receiving soil from the field, for anchoring the mulch and protecting it against disorder owing to bad weather caused by rain, sun and wind. In recent years, the use of plastic films for mulching soil and for covering small tunnels - especially films made of polyethylene (PE) and ethylene vinyl acetate (EVA) copolymers - has become increasingly widespread. In Italy alone, plastics used for this purpose currently covers more than 100,000 hectares of cultivated land, with an annual consumption of approximately 65,000 tons of film, most of which (approximately 80%) is abandoned on the land or burned in an uncontrolled manner by farmers, with the consequent introduction of noxious substances into the atmosphere and the soil. The situation is similar in the rest of Europe.

This trend, which is obviously harmful from an environmental standpoint, is particularly common for mulching materials and for films in direct contact with soil, which at the end of their life are not economically attractive for recycling operations, not least because they contain traces of soil and are contaminated by herbicides and fertilizers.

While recovery of plastics for awnings and walk-in greenhouses is slowly reaching the targets set by law (75% to be recycled by 2005), for small tunnels and mulching plastics the percentage of recovery is still low. Moreover, the practice of solarization is growing; by taking advantage of the greenhouse-effect properties of plastics, which are transparent to visible light but absorb infrared thermal radiation, these plastics warm the ground until pathogens are devitalized without using fumigating gases, such as methyl bromide, which has been banned in the European Community since 2005. The quantities of plastic material used for this purpose are being added to those used for mulching, and like them they cannot be recycled.

Mulching is mostly used for horticultural crops.

In Italy, the main crops that use and might use mulching are: cucumber, watermelon, strawberry, eggplant, melon, pepper, tomato, celery, zucchini.

The surface area occupied by these crops is equal to approximately 246,000 hectares, of which 30-40% (74,000-98,000 hectares) is subjected to mulching.

Mulching sheets are also used in some cases in the following other crops:
asparagus; carrot; onion; fennel; ornamental or foliage plants and flowers; fruit- and vine-growing; lettuce, chicory and other leafy vegetables; corn; potato; plants grown in nurseries.

In the field of organically-farmed horticultural plants, the control of weeds and fungi is unquestionably one of the most challenging problems. The difficulties are due to the lack of products of natural origin for controlling weeds and to the prohibition on using synthetic herbicides, to the objective difficulty of containing weeds using only physical and mechanical means such as weeding, and the unavoidable need to adopt technical solutions that are attractive from an economical standpoint. The horticultural crop surface subjected to potential mulching in organic farming is estimated at around 15,000-20,000 hectares.

Given the impossibility of using products with a herbicidal action, even if they are natural, in organic farming the use of mulching is more important than in conventional farming.

The synthetic materials used as mulches are predominantly plastic components of various compositions, although the most widespread is polyethylene (PE).

As regards polyethylene waste, currently 300,000 tons/year are put on the market and a recovery rate of 30% is estimated (Coldiretti estimates, 2006), while the remaining 70% is released into the environment. The recycling cost is linked mostly to the cost of the labor used for the removal operation, while the cost of transport and processing cost are lower.

The large quantities force a management of the waste that is costly, also in environmental terms (according to Italian statutory provision in Legislative Decree 152/06 and subsequent amendments), with greater difficulties if plastic films are used which are thin or are buried deeply along the edges.

Partially degradable mulching materials currently used as an alternative to PE have a poor resistance to atmospheric agents and to mechanical wear (cellulose, corn starch, viscose) or release pollutants into the ground (polyvinyl chloride).

The aim of the present invention is to provide a material that is suitable for use for mulching and which - treated with substances of natural origin - is capable of inhibiting or containing the growth of plant pests and parasites (e.g., fungi) and can be broken down easily without releasing noxious substances into the environment.

Another object of the present invention is to provide a method for mulching that is compatible with the requirements of organic farming.

Another object of the present invention is to provide a process for preparing a material for mulching that is resistant to atmospheric agents, with a low environmental impact and at low cost.

This aim and these and other objects that will become better apparent hereinafter are achieved by a structure in sheet or roll form, comprising a layer of recycled paper having one side treated with a water-repellent product and the opposite side treated with a composition comprising substances of natural origin which are active in inhibiting plant pests and parasites, wherein the substances of natural origin that are active in inhibiting plant pests and parasites are tannins, polyphenols of natural origin, terpenoids of natural origin. The aim and objects of the present invention are further achieved by a method for the production of said structure which comprises the treatment of a layer of recycled paper, in sheet or roll form, with a composition comprising a water-repellent agent on one side and with a composition comprising substances of natural origin which are active in inhibiting plant pests and parasites on the opposite side, wherein the substances of natural origin that are active in inhibiting plants pests and parasites are tannins, polyphenols of natural origin, terpenoids of natural origin. The aim and objects of the present invention are further achieved by using said structure, with the side treated with a composition comprising substances of natural origin which are active in inhibiting plant pests and parasites directed toward the ground, as material for mulching.

Within the scope of the present invention, the expression "plant pests" is used to refer to plants that can damage an agricultural production by competing with or parasitizing the plants that are being cultivated. Examples of plant pests are Chenopodum sp., Portulaca olearacea, Digitaria sp., Capsella bursa pastoris, Solanum nigrum, Convolvolus sp. Esculentes, Cynodon dactylon, Echinochloa spp. Beauv, Bidens frondosa, Fallopia japonica, Solidago spp. and Sycos angulatus.

Within the scope of the present invention, the term "parasites" is used to refer to animal and vegetable biotic agents that attack plants in various ways (for example, fungi that are deposited on the plant and remove lymph from it).

Parasites often lead to the death of the plant, either directly or indirectly, since it is necessary to eliminate the infected plant in order to avoid spreading the infestation to other plants.

The adoption of this invention not only makes it possible to control weeds without having to resort to chemical weeding but also makes it possible to prevent the onset for example of fungal diseases, such as types of rot, and also to prevent the growth cycle of parasite insects.

The presence of water and/or of high humidity, combined with high summer temperatures, in fact facilitates parasite attacks for example by fungi such as Pythim ultimum (an agent of the pythiosis disease of fruit) and Rhizoctonia solani (an agent of Rhizoctonia disease), which can penetrate into plants in the region of contact between the fruit and the ground.

The term tannin first was used in 1796 to indicate a substance present in plant extracts and capable of combining with the proteins of animal hide to form insoluble complexes, preventing its putrefaction by proteolytic enzymes and converting it into leather. Tannins are polyphenolic compounds that are common in vascular plants; in angiosperms, in particular, they are associated with wooden tissues. The richest sources of tannins are the barks of plants such as oak, chestnut, fir and acacia. They are a group of polyphenolic compounds comprising hydrolyzable tannins (derivatives of gallic acid) and polycondensates (e.g., flavones and flavonoids), generally isolated as a mixture of various compounds from vegetable extracts.

In one aspect, the present invention relates to a structure in sheet or roll form comprising a layer of paper of which one side is treated with a composition comprising a water-repellent product and the opposite side is treated with a composition comprising substances of natural origin which are active in inhibiting plant pests and parasites (e.g., tannins, polyphenols of natural origin, terpenoids of natural origin).

The structure according to the invention makes it possible to control weeds, pathogen fungi and parasites of plants thanks to the water-repellent surface, which eliminates the stagnation of water and enables the thermal insulation of the underlying soil and substances of natural origin which are active in inhibiting plant pests and parasites (such as for example tannins of natural origin, which are active both as fungicides and in combating the growth of weeds, polyphenols of natural origin, terpenoids of natural origin). In particular, the surface treatment gives the surface of the sheet a high and effective resistance to contact with water (rain, plant-watering etc.), preventing stagnations from becoming triggers and sources of surface weakening, and favoring the rapid drying of the surface.

Surprisingly, it has been found that the structure of the invention further eliminates the need to use plant protection products of synthetic origin, such as fungicides, herbicides etc., which entail high environmental and sanitary impacts in all steps of cultivation and also in the steps of production, transport, storage, distribution, sale and consumption of agricultural products. Moreover, the structure according to the invention eliminates the use of plastic films and its degradation occurs naturally in the soil, thus eliminating almost completely the need for further mechanical or manual interventions. At the end of use, the structure according to the invention can in fact be left on the soil used to cultivate the crop and, optionally, it can be incorporated into the soil by normal tilling for preparing for a new planting. It has been found that the degradation occurs naturally by means of the microflora that is present in the soil within 15-20 days after tilling.

Moreover, it has been found that the structure according to the invention, particularly thanks to the use of substances of natural origin which are active in inhibiting plant pests and parasites (such as for example tannins, polyphenols of natural origin and/or terpenoids of natural origin adsorbed into the structure), has a higher resistance to degradation and a higher capacity to prevent the growth of plant pests and parasites than those of other methods that have a higher impact on the environment.

Preferably, the structure according to the invention comprises recycled paper.

The use of recycled paper, in addition to avoiding encroaching on the consumption of renewable resources for the production of paper and returning the cellulose fibers that can no longer be used to the environment in a natural manner, reduces impacts in terms of fewer eq MJ of energy with respect to the production of plastics from a fossil source, reduces the production of equivalent kg CO₂ and also avoids reserving crops for bioplastics production that can be better used for food production. Finally, the use of recycled paper in the structure according to the invention can provide new commercial outlets to products that originate from recycling, thus developing and innovating the market of secondary materials, particularly of certified recycled paper. The particular characteristics of recycled paper together with the treatments associated with the two surfaces of the mulching sheet make it possible to better manage the stresses that are typical of other mulching systems (heat/cold, humidity, vapor permeation etc.).

Preferably, in the structure according to the invention the paper sheet has a grammage between 50 and 100 g/m².

Preferably, in the structure according to the invention the composition comprises a water-repellent product with which one side is treated. More preferably, this water-repellent product is present in a quantity comprised between 0.01% and 1% by weight on the weight of the paper (merely by way of example, the product can be a water-repellent product such as 4-(8-heptadecenylidene)-3-(7-hexadecenyl)-2-oxoethanone. This product is an adjuvant of production in the pulp and paper industry and is classified as being not hazardous to health and as having an extremely low environmental impact).

Preferably, in the structure according to the invention the paper comprises a quantity between 0.1% and 6% by weight on the weight of the dry paper of a paper coloring composition. The percentages vary depending on the color to be obtained (merely by way of example, a coloring product can comprise ferric oxide in a quantity between 30% and 50% by weight on the total weight of the composition, yellow iron (III) oxide monohydrate in a quantity between 30% and 50% by weight on the total weight of the composition, and tricalcium phosphate in a quantity between 10% and 30% by weight on the total weight of the composition).

Preferably, in the structure according to the invention the tannins are present in a quantity between 0.1% and 2% by weight on the total weight of the structure.

In another aspect, the present invention relates to a method for the production of the structure, comprising the treatment of a layer of paper, in sheet or roll form, with a composition comprising a water-repellent agent on one side and with a composition comprising substances of natural origin that are active in the inhibition of plant pests and parasites (for example tannins, polyphenols of natural origin, terpenoids of natural origin) on the opposite side.

Preferably, in the method the composition comprising substances of natural origin that are active in inhibiting plant pests and parasites is applied to the surface of the sheet by way of methods for depositing on paper (e.g., atomization, spreading, etc.) for example during the unrolling of the sheet for cutting to the appropriate format.

The composition comprising substances of natural origin which are active in inhibiting plant pests and parasites can be dosed for example with a pump with a PLC for controlling the dosage and its constancy.

Preferably, in the method according to the invention the composition comprising substances of natural origin which are active in inhibiting plant pests and parasites has a concentration of substances of natural origin which are active in inhibiting plant pests and parasites between 0.1% and 15% by weight on the total weight of the composition.

Preferably, the method according to the invention comprises the treatment of the paper with a quantity between 0.1% and 6% by weight on the weight of the dry paper of a coloring composition (by way of example, the coloring solution can comprise ferric oxide in a quantity between 30% and 50% by weight on the total weight of the composition, yellow iron (III) oxide monohydrate in a quantity between 30% and 50% by weight on the total weight of the composition, and tricalcium phosphate in a quantity between 10% and 30% by weight on the total weight of the composition).

Preferably, the method according to the invention uses a water-repellent composition that is dosed with different methods, preferably at most 1% by weight on the weight of paper produced (by way of example, the composition can comprise a water-repellent product such as 4-(8-heptadecenylidene)-3-(7-hexadecenyl)-2-oxoethanone, which can be dosed for example prior to the last step of drying the sheet, by means of a bar with atomizing nozzles). The surface glue can be conveyed for example with water so as to create a uniform atomization over the entire format of the sheet and, for example, by means of a pump with a PLC it is possible to control the dosage and its constancy.

In another aspect, the present invention relates to the use of the structure as material for mulching with the side treated with a composition comprising substances of natural origin which are active in inhibiting plant pests and parasites (for example tannins, polyphenols of natural origin, terpenoids of natural origin) directed toward the ground.

Preferably, this structure is used for mulching in protected cultivation or in an open field.

The following examples are provided in order to illustrate some practical embodiments of the invention without intending to limit its scope.

The following table is provided in order to better understand the calculated data:

| Ref. | Product code |
|---|---|
| 1 | NP test = 50 |
| 2 | Film according to the invention, grammage 80 g/m² |
| | Tannin QS SOL 7% |
| 3 | Film without tannins |
| 4 | Black PE = 80 cm |
| 5 | MaterBi NF803 = 80 cm |
| 6 | Weeded NP = 50 cm |
| 7 | Black paper roll |

The three tables (a, b, c) summarize the results of the experimental tests conducted at the Regional Center for Agricultural Experimentation and Assistance (CeRSAA) in Albenga (Province of Savona) on behalf of ASPIC.

**Table a. Change in conditions of mulching materials during cultivation**

| **Average** | **Degradation of exposed part (1 = soil 0% covered; 9 = soil 100% covered)** | ***** | **Degradation of buried part (1 = sheet fully disappeared; 9 = sheet as new)** | ***** | **Lesions (1 = very high number of lesions; 9 = no lesions)** | ***** |
|---|---|---|---|---|---|---|
| 1 | - | - | - | | - | |
| 2 | 9.0* | a | 1.5 | c | 8.5 | a |
| 3 | 6.0 | b | 1.0 | c | 5.0 | b |
| 4 | 9.0 | a | 9.0 | a | 9.0 | a |
| 5 | 8.0 | a | 3.0 | b | 7.5 | a |
| 6 | - | - | - | | - | |
| 7 | 7.8 | a | 1.5 | c | 7.8 | a |

| | | | | | | |
|---|---|---|---|---|---|---|
| *Averages followed by the same letter do not different significantly from each other according to Tukey (P = 0.05). | | | | | | |

**Table b. Weed containment effect per type of mulching material**

| This table lists the number of weeds counted per unit of surface area (m²). | | | | | | | | |
|---|---|---|---|---|---|---|---|---|
| **Average** | **(A)** | **(B)** | **(C)** | **(D)** | **(E)** | **(F)** | **Total weeds** | |
| 1 | 28.3 | 0.0 | 2.5 | 0.0 | 0.8 | 6.7 | 38.3 | c* |
| 2 | 1.5 | 1.7 | 4.2 | 0.0 | 0.0 | 2.5 | 23.3 | b* |
| 3 | 4.2 | 0.0 | 0.0 | 0.0 | 0.8 | 5.8 | 10.8 | a* |
| 4 | 1.7 | 0.8 | 0.8 | 0.0 | 0.0 | 7.5 | 10.8 | a* |
| 5 | 5.8 | 0.0 | 0.0 | 0.0 | 0.0 | 10.0 | 15.8 | a* |
| 6 | 15.8 | 10.8 | 0.0 | 0.0 | 0.0 | 1.7 | 28.3 | b* |
| 7 | 2.5 | 0.0 | 0.0 | 0.0 | 0.8 | 6.7 | 10.0 | a* |

| | | | | | | | | |
|---|---|---|---|---|---|---|---|---|
| Weed species: (A) = Chenopodium sp.; (B) Portulaca oleracea; (C) = Digitaria sp.; (D) = Capsella bursa pastoris; (E) = Solanum nigrum; (F) Convolvolus sp. *Averages followed by the same letter do not different significantly from each other according to Tukey (P = 0.05). | | | | | | | | |

Weed containment appeared to be very good for all the best mulching products (tests 3, 4 and 5); the protection of cellulose film comprising tannins was superior to that of film not comprising tannins.

**Table c. Plant growth per type of mulching material**

| Measurement (cm) of the diameter and height of zucchini plants placed in cultivation | | | | | | | | |
|---|---|---|---|---|---|---|---|---|
| **Average** | **T=0 Diameter** | ***** | **T = 20 gg Diameter** | ***** | **T = 0 Height** | ***** | **T = 20 gg Height** | ***** |
| 1 | 12.3 | b | 43.0 | b | 63.6 | b | 87.3 | a |
| 2 | 13.8 | b | 53.3 | a | 80.2 | b | 89.5 | a |
| 3 | 13.2 | b | 51.0 | a | 74.7 | ab | 87.0 | a |
| 4 | 19.4 | a | 53.5 | a | 104.2 | a | 90.8 | a |
| 5 | 17.5 | a | 54.3 | a | 94.7 | a | 86.8 | a |
| 6 | 12.9 | b | 42.0 | b | 60.2 | b | 75.5 | b |
| 7 | 15.4 | ab | 51.3 | a | 79.0 | ab | 92.3 | a |

### Comments regarding the data

The behavior of the cellulose-based material comprising tannins was satisfactory, as can be seen from the results cited above, from which the following emerges:
i. laying the material on the field did not cause operating problems of any kind;
ii. tucking the film into the soil was simple and quick;
iii. the improvement of the materials and in particular the use of tannins adsorbed into the cellulose structure made it possible to increase both the life of the product and the barrier effect of the cellulose sheet against weeds;
iv. the assessment of the degradation times of the cellulose-based film comprising tannins in the soil was improved over cellulose-based products without tannins;
v. the degradation time of the portion of film placed on the surface of the soil appeared to be long enough to contain the growth of weeds for all of the critical first growth period of the zucchini crop, i.e., at the time when the weeds compete most with the growth of the cultivated plants;
vi. the overall production of zucchini plants observed in the various parcels was found to be statistically not lower than other mulching materials. This result confirms the lack of phytotoxicity of the cellulose-based mulching material comprising tannins on the crop, which caused only a small delay at the start of production;
vii. the pepos (zucchini fruits) which in various steps of growth rested on the cellulose-based mulching film covered with a layer comprising the water-repellent substance did not suffer aesthetic damage of any kind (stains, dirtying, etc.);
viii. the temperature detected in the topmost layers of soil (5 cm depth) is not statistically different between the parcels mulched with the cellulose-based material covered with a layer comprising the water-repellent substance and those mulched with products based on thermoplastic starch or with PE, while it is statistically higher than those observed in parcels that were not mulched;
ix. the moisture content of the soil, measured in a dry stove at an intermediate step of the growth at the depth of 10 cm, was found to be significantly higher in the parcels mulched with material covered with a layer comprising the water-repellent substance than that of the parcels that were not mulched and were not mulched and weeded;
x. control of the number of weeds that grew in the various parcels highlighted the good herbicidal effect of the cellulose-based material covered with a layer comprising the water-repellent substance, with results which were at least equivalent to the other mulching materials used for comparison;
xi. the control and verification of the differing presence of any plant and vegetable parasites did not reveal particular differences that could be linked to the presence of different mulching materials or to their absence.

Furthermore, the invention lends itself - alone or together with other materials (for example - and without intending to limit its possibilities of application - in combination with other paper-like materials and/or products, but also plastic, metallic, mineral materials etc.) - to different uses in the most disparate sectors in which it can solve specific problems, by virtue of its characteristics of easy transformability and adaptability (by folding, cutting, gluing etc.) together with the specific advantages that the treatments give it (water-repellency, inhibition or containment of, for example, fungi, molds).

The invention, therefore, can be used in several ways for example in the building sector (for example as thermal insulation and/or insulating means, as a filler, as a covering, etc., to limit the growth of molds etc. for example due to the presence of humidity in manufactured articles), but also for example as packaging in the transport and preservation of goods which might be better protected and safeguarded (and in a natural way, too) against humidity and parasites.

The disclosures in Italian Patent Application No. MI2010A001964 from which this application claims priority are incorporated herein by reference.

## Claims

1. A structure in sheet or roll form, comprising a layer of recycled paper in which one side is treated with a composition comprising a water-repellent product and the opposite side is treated with a composition comprising substances of natural origin which are active in inhibiting plant pests and parasites, wherein the substances of natural origin that are active in inhibiting plant pests and parasites are tannins, polyphenols of natural origin, terpenoids of natural origin,

2. The structure according to claim 1, wherein the paper sheet before treatment has a grammage between 50 g/m² and 100 g/m².

3. The structure according to one of the preceding claims, wherein the water-repellent composition with which one side is treated is present in a quantity comprised between 0.01% and 1% by weight on the weight of the paper.

4. The structure according to one of the preceding claims, wherein the paper comprises a quantity of a coloring composition between 0.1% and 6% by weight on the weight of the paper.

5. The structure according to one of the preceding claims, wherein the substances of natural origin that are active in inhibiting plant pests and parasites are present in a quantity between 0.1% and 2% by weight on the total weight of the structure.

6. A method for manufacturing the structure according to one of the preceding claims, comprising the treatment of a layer of recycled paper, in sheet or roll form, with a composition comprising a water-repellent agent on one side and with a composition comprising substances of natural origin that are active in inhibiting plant pests and parasites on the opposite side, wherein the substances of natural origin that are active in inhibiting plant pests and parasites are tannins, polyphenols of natural origin, terpenoids of natural origin.

7. The method according to claim 6, wherein the composition comprising of substances of natural origin that are active in inhibiting plant pests and parasites is deposited on the layer af parer by atomization or spreading.

8. The method according to one of claims 6 and 7, wherein the composition comprising substances of natural origin that are active in inhibiting plant pests and parasites has a concentration of substances of natural origin that are active in inhibiting plant pests and parasites between 0.1% and 15% by weight on the total weight of the composition.

9. The method according to one of claims 6 to 8, comprising the treatment of the paper during the production of paper pulp with a quantity of a coloring composition between 0.1% and 6% by weight on the weight of the paper.

10. Use as a material for mulching of the structure according to one of claims 1 to 5 with the side treated with a composition comprising substances of natural origin that are active in inhibiting plant pests and parasites directed toward the ground.

11. The use according to claim 10 , wherein the ground is a protected cultivation ground.

12. The use according to claim 10, wherein the ground is in an open field.

13. Use of the structure according to one of claims 1 to 5 as insulating means, filler or covering in building sector, or as a packaging with water-repellent and mold-resistance characteristics.

## Patentansprüche

1. Eine Struktur in Lagen- oder Rollenform, die eine Schicht von recyceltem Papier umfasst, bei der eine Seite mit einer Zusammensetzung behandelt ist, die ein wasserabstoßendes Produkt umfasst, und die gegenüberliegende Seite mit einer Zusammensetzung behandelt ist, die Substanzen natürlichen Ursprungs umfasst, die wirksam zur Hemmung von Pflanzenschädlingen und Parasiten sind, worin die Substanzen natürlichen Ursprungs, die wirksam zur Hemmung von Pflanzenschädlingen und Parasiten sind, Tannine, Polyphenole natürlichen Ursprungs, Terpenoide natürlichen Ursprungs sind.

2. Die Struktur gemäß Anspruch 1, worin die Papierschicht vor der Behandlung ein Quadratmetergewicht zwischen 50 g/m² und 100g/m² hat.

3. Die Struktur gemäß einem der obigen Ansprüche, worin die wasserabstoßende Zusammensetzung, mit der eine Seite behandelt ist, in einer Menge vorliegt, die zwischen 0,01 und 1 Gewichtsprozent des Gewichts des Papiers beträgt.

4. Die Struktur gemäß einem der obigen Ansprüche, worin das Papier eine Menge einer Farbmittelzusammensetzung zwischen 0,1 und 6 Gewichtsprozent des Gewichts des Papiers umfasst.

5. Die Struktur gemäß einem der obigen Ansprüche, worin die Substanzen natürlichen Ursprungs, die zur Hemmung von Pflanzenschädlingen und Parasiten wirksam sind, in einer Menge zwischen 0,1 Gewichtsprozent und 2 Gewichtsprozent des Gesamtgewichts der Struktur vorliegen.

6. Ein Verfahren zum Herstellen der Struktur gemäß einem der obigen Ansprüche, das die Behandlung einer Schicht von recyceltem Papier, in Lagen- oder Rollenform, mit einer Zusammensetzung, die ein wasserabstoßendes Mittel umfasst, auf einer Seite und mit einer Zusammensetzung, die Substanzen natürlichen Ursprungs, die wirksam zur Hemmung von Pflanzenschädlingen und Parasiten sind, auf der gegenüberliegenden Seite umfasst, worin die Substanzen natürlichen Ursprungs, die wirksam zur Hemmung von Pflanzenschädlingen und Parasiten sind, Tannine, Polyphenole natürlichen Ursprungs, Terpenoide natürlichen Ursprungs sind.

7. Das Verfahren gemäß Anspruch 6, worin die Zusammensetzung, die aus Substanzen natürlichen Ursprungs besteht, die wirksam zur Hemmung von Pflanzenschädlingen und Parasiten sind, auf die Papierschicht durch Versprühen oder Streichen aufgetragen wird.

8. Das Verfahren gemäß einem der Ansprüche 6 und 7, worin die Zusammensetzung, die Substanzen natürlichen Ursprungs umfasst, die wirksam zur Hemmung von Pflanzenschädlingen und Parasiten sind, eine Konzentration von Substanzen natürlichen Ursprungs, die wirksam zur Hemmung von Pflanzenschädlingen und Parasiten sind, zwischen 0,1 Gewichtsprozent und 15 Gewichtsprozent des Gesamtgewichts der Zusammensetzung hat.

9. Das Verfahren gemäß einem der Ansprüche 6 bis 8, das die Behandlung des Papiers während der Herstellung von Papierzellstoff mit einer Menge einer Farbmittelzusammensetzung zwischen 0,1 und 6 Gewichtsprozent des Papiergewichts umfasst.

10. Verwendung als Material zum Mulchen der Struktur gemäß einem der Ansprüche 1 bis 5, wobei die Seite, die mit einer Zusammensetzung behandelt ist, welche Substanzen natürlichen Ursprungs umfasst, die wirksam zur Hemmung von Pflanzenschädlingen und Parasiten sind, zum Boden hin gerichtet ist.

11. Die Verwendung gemäß Anspruch 10, worin der Boden ein geschützter bestellter Boden ist.

12. Die Verwendung gemäß Anspruch 10, worin der Boden ein offenes Feld ist.

13. Verwendung der Struktur gemäß einem der Ansprüche 1 bis 5 als Isoliermaterial, Füllstoff oder Abdeckmaterial im Bausektor, oder als Verpackung mit wasserabstoßenden und schimmelresistenten Eigenschaften.

## Revendications

1. Structure sous forme de feuille ou de rouleau, comprenant une couche de papier recyclé dans laquelle une face est traitée avec une composition comprenant un produit hydrofuge et la face opposée est traitée avec une composition comprenant des substances d'origine naturelle qui sont actives pour inhiber les plantes nuisibles et les parasites, dans laquelle les substances d'origine naturelle qui sont actives pour inhiber les plantes nuisibles et les parasites sont les tanins, les polyphénols d'origine naturelle, les terpénoïdes d'origine naturelle.

2. Structure selon la revendication 1, dans laquelle la feuille de papier avant traitement a un grammage compris entre 50 g/m² et 100 g/m².

3. Structure selon l'une des revendications précédentes, dans laquelle la composition hydrofuge avec laquelle une face est traitée est présente en une quantité comprise entre 0,01 % et 1 % en poids par rapport au poids du papier.

4. Structure selon l'une des revendications précédentes, dans laquelle le papier comprend une quantité d'une composition colorante comprise entre 0,1 % et 6 % en poids par rapport au poids du papier.

5. Structure selon l'une des revendications précédentes, dans laquelle les substances d'origine naturelle qui sont actives pour inhiber les plantes nuisibles et les parasites sont présentes en une quantité comprise entre 0,1 % et 2 % en poids par rapport au poids total de la structure.

6. Procédé de fabrication de la structure selon l'une des revendications précédentes, comprenant le traitement d'une couche de papier recyclé, sous forme de feuille ou de rouleau, avec une composition comprenant un produit hydrofuge sur une face et avec une composition comprenant des substances d'origine naturelle qui sont actives pour inhiber les plantes nuisibles et les parasites sur la face opposée, dans laquelle les substances d'origine naturelle qui sont actives pour inhiber les plantes nuisibles et les parasites sont les tanins, les polyphénols d'origine naturelle, les terpénoïdes d'origine naturelle.

7. Procédé selon la revendication 6, dans lequel la composition comprenant des substances d'origine naturelle qui sont actives pour inhiber les plantes nuisibles et les parasites est déposée sur la couche de papier par atomisation ou par enduction.

8. Procédé selon l'une des revendications 6 et 7, dans lequel la composition comprenant des substances d'origine naturelle qui sont actives pour inhiber les plantes nuisibles et les parasites a une concentration de substances d'origine naturelle qui sont actives pour inhiber les plantes nuisibles et les parasites comprise entre 0,1 % et 15 % en poids par rapport au poids total de la composition.

9. Procédé selon l'une des revendications 6 à 8, comprenant le traitement du papier pendant la production de pâte à papier avec une quantité d'une composition colorante comprise entre 0,1 % et 6 % en poids par rapport au poids du papier.

10. Utilisation comme matériau de paillage de la structure selon l'une des revendications 1 à 5 avec la face traitée avec une composition comprenant des substances d'origine naturelle qui sont actives pour inhiber les plantes nuisibles et les parasites orientée vers le sol.

11. Utilisation selon la revendication 10, dans laquelle le sol est un sol de culture protégé.

12. Utilisation selon la revendication 10, dans laquelle le sol se trouve en plein champ.

13. Utilisation de la structure selon l'une des revendications 1 à 5 comme moyen isolant, matériau de remplissage ou couverture dans le secteur du bâtiment, ou comme emballage ayant des caractéristiques hydrofuges et antifongiques.
